# EUROPEAN PATENT APPLICATION

(11) **EP 4 343 583 A1**
(43) Date of publication of application: **27.03.2024**
(21) Application number: 22855331.9
(22) Date of filing: 04.08.2022
(51) Int. Cl.: G06F 16/783

(54) **TEXT INPUT METHOD AND APPARATUS, AND ELECTRONIC DEVICE AND STORAGE MEDIUM**

(30) Priority: 13.08.2021 CN 202110932864
(71) Applicant: Beijing Zitiao Network Technology Co., Ltd., Beijing 100190 (CN)
(72) Inventor: ZHANG, Wenwen, Beijing 100086 (CN); CHE, Wanli, Beijing 100086 (CN)
(74) Representative: Dentons UK and Middle East LLP
(86) International application number: PCT/CN2022/110316
(87) International publication number: WO 2023/016349

(57) **Abstract**

Disclosed in the embodiments of the present disclosure are a text input method and apparatus, and an electronic device and a storage medium. The method comprises: on the basis of a video to be edited, determining at least two recommended text items; displaying the at least two recommended text items in a first target area of an editing page of said video; and in response to a first trigger operation acting on a first recommended text item, displaying, in a text input area of the editing page, a first text that is comprised in the first recommended text item, wherein the first trigger operation is used for determining the selected first recommended text item from the at least two recommended text items.

## Description

### CROSS-REFERENCE OF RELATED APPLICATION

The present disclosure claims the priority of China Patent Application 202110932864.7 filed on August 13, 2021 entitled as "TEXT INPUT METHOD AND APPARATUS, AND ELECTRONIC DEVICE AND STORAGE MEDIUM", which is hereby incorporated by reference in its entirety.

### FIELD OF THE INVENTION

The present disclosure relates to the field of information technology, and in particular, to a text input method, apparatus, electronic device and storage medium.

### BACKGROUND

With rapid development of terminal technology and network technology, the prior video applications usually have functions such as publishing works. Users can make creation through video applications to publish wonderful videos, or record their daily lives and publish videos randomly taken in their lives.

Users often edit videos before publishing them.

However, the existing technology has the problem that video editing is difficult, which is not conducive to users quickly publishing works.

### DISCLOSURE OF THE INVENTION

In order to solve the above technical problems or at least partially solve the above technical problems, embodiments of the present disclosure provide a text input method, apparatus, electronic device and storage medium, which can reduce the difficulty of adding text in videos, improve the user experience, and help to improve the efficiency of the user publishing works.

In a first aspect, an embodiment of the present disclosure provides a text input method, which includes:
determining at least two recommended text items based on a video to be edited;
displaying the at least two recommended text items in a first target area of an editing page for the video to be edited;
in response to a first trigger operation acting on a first recommended text item, displaying a first text included in the first recommended text item in a text input area of the editing page, wherein the first trigger operation is used to determine the selected first recommended text item from the at least two recommended text items.

In a second aspect, an embodiment of the present disclosure also provides a text input apparatus, which includes:
a recommended text determination module configured to determine at least two recommended text items based on a video to be edited;
a first display module configured to display the at least two recommended text items in a first target area of an editing page for the video to be edited;
a second display module configured to, in response to a first trigger operation acting on a first recommended text item, display a first text included in the first recommended text item in a text input area of the editing page, wherein the first trigger operation is used to determine the selected first recommended text item from the at least two recommended text items.

In a third aspect, an embodiment of the present disclosure also provides an electronic device, where the electronic device includes:
one or more processors;
a storage device for storing one or more programs;
wherein the one or more programs, when executed by the one or more processors, cause the one or more processors to implement the text input method as described above.

In a fourth aspect, an embodiment of the present disclosure also provides a computer-readable storage medium having stored a computer program thereon, the program, when executed by a processor, causes implementation of the text input method as described above.

### Beneficial Effects

Embodiments of the present disclosure can play multimedia data and music data to be presented based on a lyric video presentation operation from a user, where the multimedia data includes image data, and the music data includes audio data and lyrics. meanwhile, determine a target object in the image data and a target lyrics in the lyrics, display the target lyric near the target object, and adjust display effects of the lyrics based on depth information of the target object, embed the lyrics into the real space of the image data, which can give the user a sensory experience of virtual display, and the user experience becomes better.

### DESCRIPTION OF THE DRAWINGS

The above and other features, advantages, and aspects of various embodiments of the present disclosure will become more apparent with reference to the following detailed description taken in conjunction with the accompanying drawings. Throughout the drawings, the same or similar reference numbers refer to the same or similar elements. It shall be understood that the drawings are schematic and that components and elements are not necessarily drawn to scale.
FIG. 1 is a flowchart of a text input method according to an embodiment of the present disclosure;
FIG. 2 is a schematic diagram of a video editing page according to an embodiment of the present disclosure;
FIG. 3 is a schematic diagram of a video editing page according to an embodiment of the present disclosure;
FIG. 4 is a schematic diagram of a video editing page according to an embodiment of the present disclosure;
FIG. 5 is a schematic diagram of a video editing page according to an embodiment of the present disclosure;
FIG. 6 is a flowchart of a text input method according to an embodiment of the present disclosure;
FIG. 7 is a flowchart of a text input method according to an embodiment of the present disclosure;
FIG. 8 is a schematic diagram of a video editing page according to an embodiment of the present disclosure;
FIG. 9 is a schematic diagram of a video editing page according to an embodiment of the present disclosure;
FIG. 10 is a schematic diagram of a video editing page according to an embodiment of the present disclosure;
FIG. 11 is a schematic diagram of a video editing page according to an embodiment of the present disclosure;
FIG. 12 is a schematic structural diagram of a text input apparatus according to an embodiment of the present disclosure;
FIG. 13 is a schematic structural diagram of an electronic device according to an embodiment of the present disclosure.

### DETAILED DESCRIPTION OF PREFERRED EMBODIMENTS

Embodiments of the present disclosure will be described in more detail below with reference to the accompanying drawings. Although certain embodiments of the disclosure are shown in the drawings, it should be understood that the disclosure may be embodied in various forms and should not be construed as being limited to the embodiments set forth herein, which rather are provided for more thorough and complete understanding of the present disclosure. It should be understood that the drawings and embodiments of the present disclosure are for illustrative purposes only, instead of being not intended to limit the scope of the present disclosure.

It should be understood that various steps described in the method implementations of the present disclosure may be executed in different orders and executed in parallel. Furthermore, method embodiments may include additional steps and/or omit performance of illustrated steps. The scope of the present disclosure is not limited in this regard.

As used herein, the term "comprise" and its variations are open-ended, i.e., "comprising but not limited to". The term "based on" means "based at least in part on". The term "one embodiment" means "at least one embodiment"; the term "another embodiment" means "at least one additional embodiment"; and the term "some embodiments" means "at least some embodiments". Relevant definitions of other terms will be given in the description below.

Concepts such as "first" and "second" mentioned in this disclosure are only used to distinguish different apparatuses, modules or units, instead of being used to limit the order or interdependence of the functions performed by these apparatuses, modules or units.

The modifications of "one" and "multiple" mentioned in this disclosure are illustrative and not restrictive. Those skilled in the art will understand that unless the context indicates otherwise, it should be understood as "one or more".

The names of messages or information interacted between multiple apparatuses in the embodiments of the present disclosure are for illustrative purposes only, instead of being used to limit the scope of these messages or information.

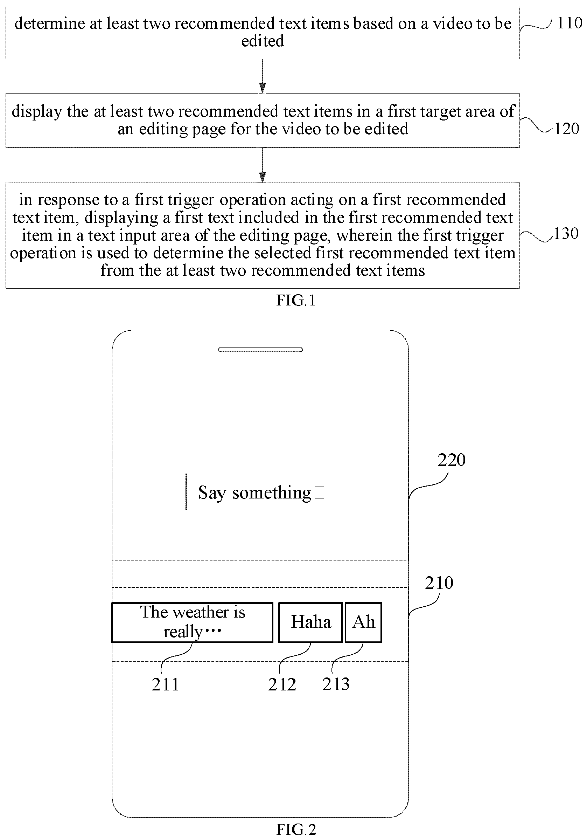

FIG. 1 is a flowchart of a text input method according to an embodiment of the present disclosure. This method is suitable for an application scenario of adding text to a video to be edited. The method can be executed by a text input apparatus, which can be implemented in the form of software and/or hardware, the apparatus can be configured in an electronic device, such as a display terminal, specifically including but not limited to smart phones, handheld computers, tablets, portable wearable devices, smart home devices (such as desk lamps) and other electronic devices with displays.

As shown in FIG. 1, the method may specifically include the following steps:
Step 110: determine at least two recommended text items based on a video to be edited.

Among them, the video to be edited can be a video shot by a user in real time, or a historical video selected from a photo album.

In one implementation, determining at least two recommended text items based on the video to be edited includes: performing frame extraction on the video to be edited; determining theme information of the video to be edited based on the extracted video frames; and determining the at least two recommended text items based on the theme information and/or popularity information of each candidate text item in a text library. For example, if it is determined that the theme information of the video to be edited is "landscape" by performing image recognition on the extracted video frames, then the text items related to landscape can be determined as recommended text items. Furthermore, text items whose popularity reaches a threshold can also be determined from text items related to landscape as recommended text items. Among them, the popularity of the text item can be determined based on the number of times that the text item is used within a period of time. If it is determined that the theme information of the video to be edited is "person", then the text items related to person can be determined as recommended text items, furthermore, the text items whose popularity reaches the threshold can be determined as the recommended text from the text items related to person.

Step 120: display the at least two recommended text items in a first target area of an editing page for the video to be edited.

Reference is made to the schematic diagram of a video editing page shown in FIG. 2, it includes a first target area 210 and a text input area 220, there are three recommended text items displayed in the first target area 210, which are a first recommended text item 211, a second recommended text item 212 and a third recommended text item 213. If the amount of texts included in the recommended text item is relative small, the recommended text item is the texts included in the recommended text item; if the amount of texts included in the recommended text item is relative large, the recommended text item is part of the included texts, for example, the texts included in the recommended text item has 15 words, specifically: "The weather is really nice today, let me go out for a walk together", then the recommended text item can be five of the words, "The weather is really nice today..." and the remaining words are replaced with ellipsis, the reason for this setting is mainly that due to limitation of the size of the terminal display screen, too much texts cannot be directly displayed. The amount of texts included in the text item and the amount of texts that needs to be displayed can be configured through parameters.

Among them, the video editing page can specifically refer to a text editing page for adding a text to the video to be edited, the video to be edited can be a video that has been shot, which can be shot by the user in real time or selected from the photo album. It shall be understood that if the editing page is an editing page where the user enters through a "text" sticker on a video shooting page to add text, if the video to be edited has not been shot yet or a specific video to be edited has not been selected from the album yet, the text input method provided in the embodiment would not be executed, because the video to be edited does not yet exist, the recommended text item cannot be determined based on the video to be edited yet.

In one implementation, each of the recommended text items may be sorted and displayed in the first target area based on its relevance to the video to be edited and/or the popularity of each of the recommended text items. For example, a recommended text item that has a strong relevance to the video to be edited can be displayed at a position further to the left in the first target area, and a recommended text item that has a weak relevance to the video to be edited can be displayed at a position further to the right in the first target area. Alternatively, a recommended text item with higher popularity can be displayed at a position further to the left in the first target area, and a recommended text item with lower popularity can be displayed at a position further to the right of the first target area. The recommended text items can also be sorted and displayed by comprehensively considering the relevance of each recommended text item to the video to be edited and the popularity of each recommended text item.

Step 130: in response to a first trigger operation acting on a first recommended text item, displaying a first text included in the first recommended text item in a text input area of the editing page, wherein the first trigger operation is used to determine the selected first recommended text item from the at least two recommended text items.

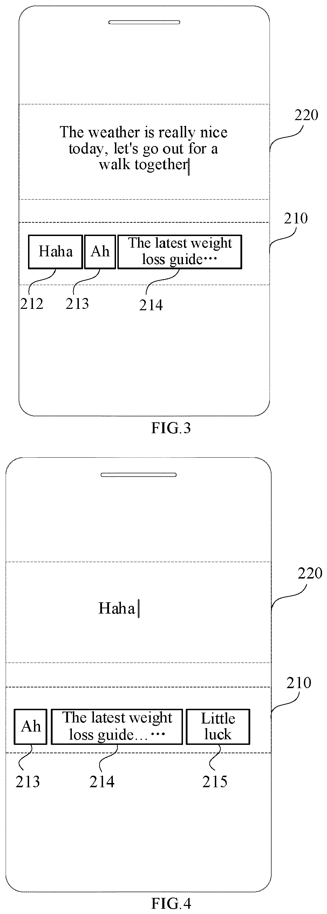

Reference is made to the schematic diagram of a video editing page shown in FIG. 3, on the basis of FIG. 2, if a user clicks on a first recommended text item 211 (the first recommended text item 211 is the first recommended text item) , then the text included in the first recommended text item 211 (that is, the first text) is displayed in the text input area 220, that is, "The weather is really nice today, let's go out for a walk together". In this way, the user only needs to select the one he likes from the recommended text items to complete the text addition, without the user needing to organize the language to form the text, which can reduce the user's thinking cost and improve the user's satisfaction with the added text, and then can encourage more users to add text information when publishing videos, and thereby greatly meet the needs of some users who have text expression needs but are limited by their own language expression level. Furthermore, adding more text information to the video will help to improve the efficiency of video consumption.

Furthermore, in response to the first trigger operation acting on the first recommended text item, the first recommended text item can be replaced with other recommended text items than the first recommended text item for displaying in the first target area, so that the user can see more recommended text items. As shown in FIG. 3, the first recommended text item 211 is removed from the first target area 210, a second recommended text item 212 occupies the position of the first recommended text item 211, and a third recommended text item 213 occupies the position of the second recommended text item 212, the fourth recommended text item 214 newly appearing in the first target area 210 occupies the position of the third recommended text item 213. In summary, the triggered recommended text item is removed from the first target area, and the remaining recommended text items that have been displayed in the first target area are moved to the left as a whole, and the vacant position can be used to display a recommended text item that has not been displayed in the first target area.

In one implementation, the text input method further includes:
In response to a second trigger operation acting on a second recommended text item, replace the first text with a second text included in the second recommended text item, wherein the second trigger operation is used to determine the selected second recommended text item from the at least two recommended text items. Reference is made to the schematic diagram of a video editing page shown in FIG. 4, on the basis of FIG. 3, if the user further clicks on the second recommended text item 212 (that is, the second recommended text item), then the second text (i.e., "Haha") included in the text item 212 can be used to replace the first text (i.e., "The weather is really nice today, let's go out for a walk together") for displaying in the text input area 220, that is, the text input area 220 only displays the second text, while no longer displaying the first text. Similarly, the triggered second recommended text item 212 is removed from the first target area 210, and the remaining recommended text items (the third recommended text item 213 and the fourth recommended text item 214) that have been displayed in the first target area 210 can move to the left as a whole, and the vacant position is used to display a fifth recommended text item 215 that has not been displayed in the first target area.

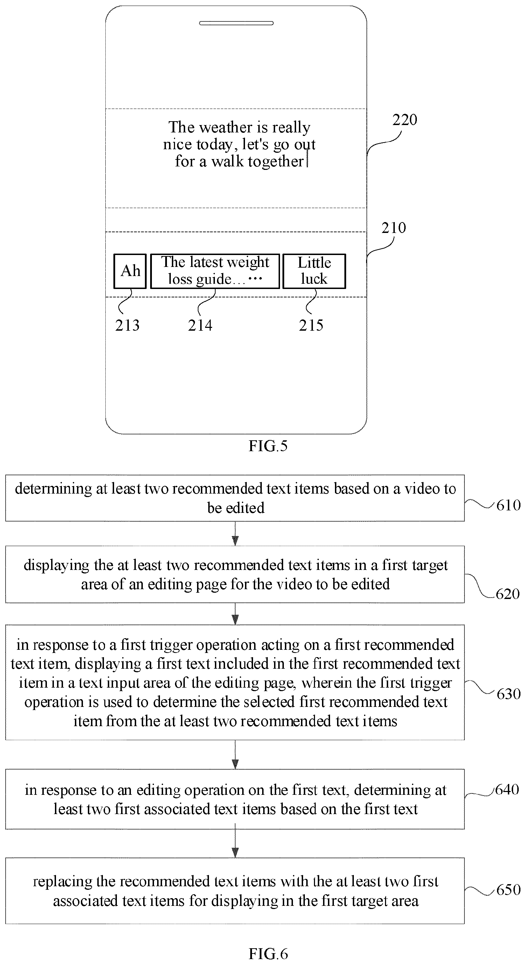

In another implementation, in response to a second trigger operation acting on a second recommended text item, the second text is displayed at a position associated with the first text. As shown in FIG. 5, the second text is displayed behind the first text, and the first text and the second text are separated by a space, that is, the first text and the second text are displayed in the text input area 220 at the same time.

The text input method provided by this embodiment determines at least two recommended text items based on the video to be edited, and displays the at least two recommended text items in the first target area of the video editing page, if the user triggers one of the recommended text items, then, the first text included in the triggered recommended text item is displayed in the text input area of the edit page, thereby realizing the input of the first text. That is, when the user is intended to add text to the video to be edited, recommended text items can be provided to the user, the user only needs to select the one with which the user is satisfied from the provided recommended text items, without the user needing to organize the language to form the text, which can reduce the user's thinking cost and improve the user's satisfaction with the added text, and then can encourage more users to add text information when publishing videos, and thereby greatly meet the needs of some users who have text expression needs but are limited by their own language expression level. Furthermore, adding more text information to the video will help to improve the efficiency of video consumption.

On the basis of the above embodiment, if the execution of the above step 110 fails, that is, the operation of determining at least two recommended text items based on the video to be edited fails, in other words, no recommended text item is obtained, at this time, in order to provide users with basic services, preset text items are displayed in the first target area, and the preset text items may be some highly popular text items.

FIG. 6 is a schematic flowchart of a text input method according to an embodiment. On the basis of the above embodiments, this embodiment further optimizes the text input method, the advantage of the optimization is that personalized text recommendations can be made for a user based on the user's interactive operations, so as to further improve the efficiency and satisfaction of users adding text.

As shown in FIG. 6, the text input method includes the following steps:
Step 610: determining at least two recommended text items based on a video to be edited.
Step 620: displaying the at least two recommended text items in a first target area of an editing page for the video to be edited.
Step 630: in response to a first trigger operation acting on a first recommended text item, displaying a first text included in the first recommended text item in a text input area of the editing page, wherein the first trigger operation is used to determine the selected first recommended text item from the at least two recommended text items.
Step 640: in response to an editing operation on the first text, determining at least two first associated text items based on the first text.
wherein, the editing operation on the first text includes deleting one or more texts in the first text, and at this time, association recommendations can be made based on the remaining texts after deletion; the editing operation on the first text may also include starting up an input method based on the first text and then association recommendations can be made based on the first text, or when the user inputs certain text or certain texts through the input method, then association recommendations can be made based on the first text and/or the text input by the user. For example, when the user inputs "weather", association recommendations can be made based on "weather", and the determined first associated text item can be "really nice".
Step 650: replacing the recommended text items with the at least two first associated text items for displaying in the first target area.

Wherein, the associated text items may be sorted and displayed in the first target area based on the relevance of each associated text item to the video to be edited and/or the popularity of each associated text item. For example, an associated text item that has a strong relevance to the video to be edited can be displayed at a position further to the left in the first target area, and an associated text item that has a weak relevance to the video to be edited can be displayed at a position further to the right in the first target area. Alternatively, an associated text item with higher popularity can be displayed at a position further to the left in the first target area, and an associated text item with lower popularity can be displayed at a position further to the right of the first target area. The associated text items can also be sorted and displayed by comprehensively considering the relevance of each associated text item to the video to be edited and the popularity of each associated text item.

Similar to the interactive process of recommended text items, if the user clicks on a specific associated text item, the text included in the clicked associated text item will be displayed in the text input area of the editing page, thereby enabling convenient addition of text, thereafter, the logic of association recommendation is to perform association searching based on the text in the text input area, obtain a new associated text item, and recommend the new associated text item to the user, thereby achieving the purpose of improving recommendation accuracy.

Specifically, in response to a third trigger operation acting on the target associated text item, a third text included in the target associated text item is displayed in the text input area of the editing page, wherein the third trigger operation is used to determine the selected target associated text item from the at least two first associated text items; determine at least two second associated text items based on the third text, and replace the at least two first associated text items with the at least two second associated text items for displaying in the first target area.

The text input method provided by this embodiment further optimizes the text input method based on the above embodiment, and specifically, when the user performs an editing operation on the first text input into the text input area, performs association recommendation based on the first text, and displays associated text items related to the first text in the first target area of the editing page for the user to select, if the user selects one of the associated text items, then performs next round of recommendation based on associated text included in the associated text item selected by the user. The advantage of the optimization is that personalized text recommendations can be made for a user based on the user's interactive operations, so as to further improve the efficiency and satisfaction of users adding text.

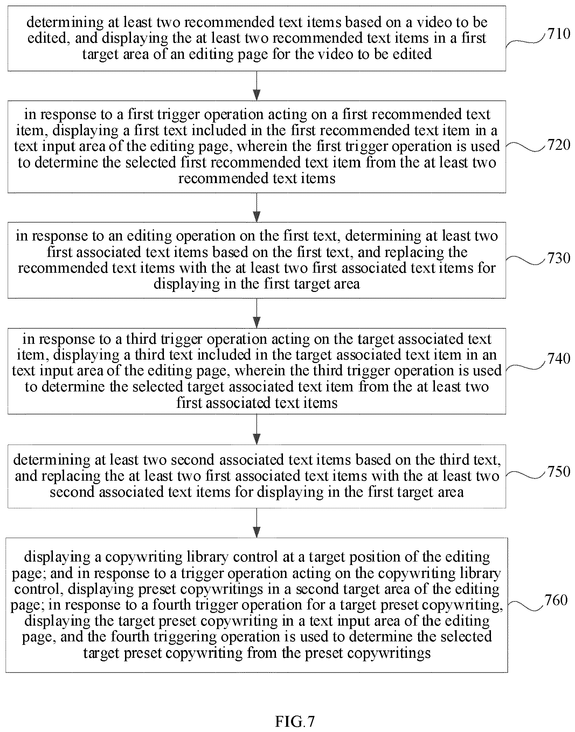

FIG. 7 is a schematic flowchart of a text input method according to an embodiment. On the basis of the above embodiment, this embodiment further optimizes the text input method, and specifically, displays a copywriting library control at a target position of the editing page, if the user clicks the copywriting library control, the preset copywriting in the copywriting library can be displayed, allowing the user to choose the copywriting with which the user is satisfied for adding to the video to be edited. The advantage of optimization is to provide the user with more copy writing options, further improving the efficiency and satisfaction of users adding text.

As shown in FIG. 7, the text input method includes the following steps:
Step 710: determining at least two recommended text items based on a video to be edited, and displaying the at least two recommended text items in a first target area of an editing page for the video to be edited.
Step 720: in response to a first trigger operation acting on a first recommended text item, displaying a first text included in the first recommended text item in a text input area of the editing page, wherein the first trigger operation is used to determine the selected first recommended text item from the at least two recommended text items.
Step 730: in response to an editing operation on the first text, determining at least two first associated text items based on the first text, and replacing the recommended text items with the at least two first associated text items for displaying in the first target area.
Step 740: in response to a third trigger operation acting on the target associated text item, displaying a third text included in the target associated text item in a text input area of the editing page, wherein the third trigger operation is used to determine the selected target associated text item from the at least two first associated text items.
Step 750: determining at least two second associated text items based on the third text, and replacing the at least two first associated text items with the at least two second associated text items for displaying in the first target area.
Step 760: displaying a copywriting library control at a target position of the editing page; and in response to a trigger operation acting on the copywriting library control, displaying preset copywritings in a second target area of the editing page; in response to a fourth trigger operation for a target preset copywriting, displaying the target preset copywriting in a text input area of the editing page, and the fourth triggering operation is used to determine the selected target preset copywriting from the preset copywritings.

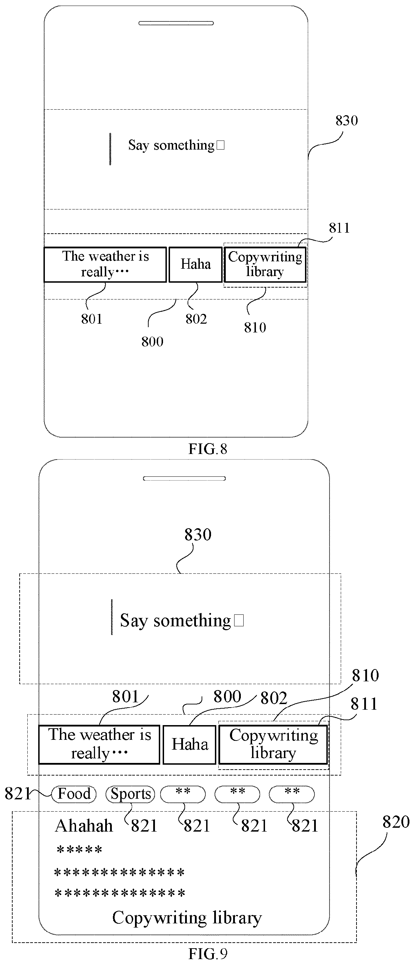

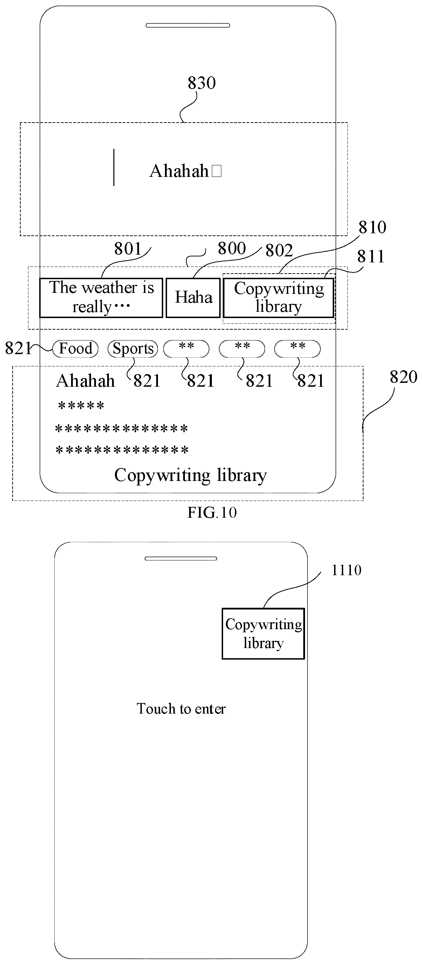

In one implementation, referring to the schematic diagram of an editing page as shown in FIG. 8, recommended text items 801 and 802 are displayed in the first target area 800, and a copywriting library control 811 is displayed at the target position 810, If the user triggers the copywriting library control 811, then the schematic diagram of the editing page as shown in FIG. 9 can be displayed, preset copywritings are displayed in a second target area 820 of the editing page, if the user selects a specific preset copywriting, the selected preset copy writing can be displayed in the text input area 830, as shown in FIG. 10.

Furthermore, in order to improve the efficiency of the user browsing the preset copy writings and facilitate the user to quickly find the desired preset copywriting, as shown in FIG. 8, at least two copywriting category labels 821 are displayed in the third target area of the editing page; in response to a fifth triggering operation acting on the target copywriting category label, the preset copy writings under the target copywriting category label can be displayed in the second target area 820, wherein the fifth triggering operation is used to determine the selected target copywriting category label from the at least two copywriting category labels. For example, if the user clicks on the "Food" label, the preset copywriting relevant to food will be displayed in the second target area 820. If the user clicks the "Sports" label, the preset copywriting relevant to sports will be displayed in the second target area 820.

In another implementation, if the user has not selected or shot the video to be edited, but first edits a text that is intended to be pre-added to the video, referring to the schematic diagram of an editing page as shown in FIG. 11, a copywriting library control 1111 is displayed at the target position 1110, and by setting the target position 1110 on the upper right side of the editing page, the user can be provided with a text input area as large as possible.

On the basis of the above embodiments, the text input method provided by this embodiment can further optimize the text input method, specifically, displays the copy writing library control at the target position of the editing page, if the user clicks the copywriting library control, then displays preset copywritings in the copywriting library, so that the user can select the copywriting with which the user is satisfied to add it to the video to be edited. The advantage of optimization is to provide the user with more copywriting options, further improving the efficiency and satisfaction of users adding text.

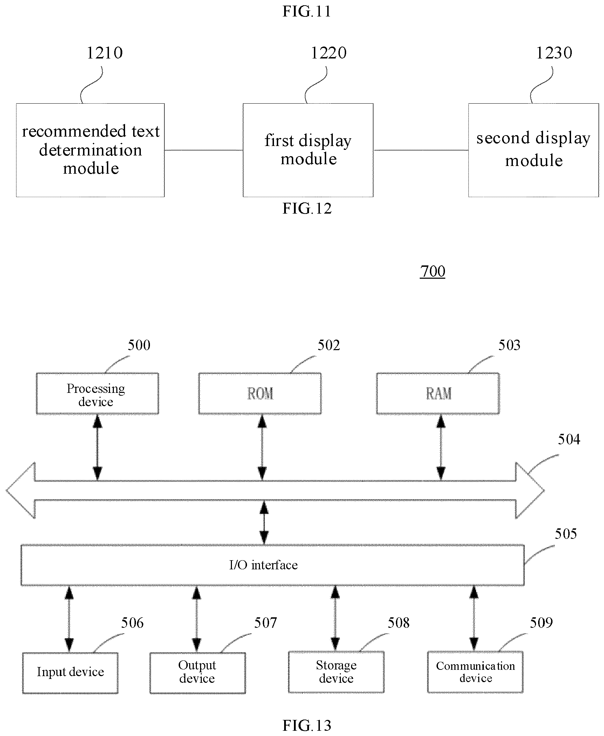

FIG. 12 is a schematic structural diagram of a text input apparatus according to an embodiment of the present disclosure. As shown in FIG. 12, the text input apparatus specifically includes: a recommended text determination module 1210, a first display module 1220 and a second display module 1230.

Wherein, the recommended text determination module 1210 is configured to determine at least two recommended text items based on a video to be edited; the first display module 1220 is configured to display the at least two recommended text items in a first target area of an editing page for the video to be edited; and the second display module 1230 is configured to, in response to a first trigger operation acting on a first recommended text item, display a first text included in the first recommended text item in a text input area of the editing page, wherein the first trigger operation is used to determine the selected first recommended text item from the at least two recommended text items.

Optionally, the second display module 1230 is further configured to: in response to a second trigger operation acting on a second recommended text item, replace the first text with a second text included in the second recommended text item, or display the second text at an associated position of the first text, wherein the second trigger operation is used to determine the selected second recommended text item from the at least two recommended text items.

Optionally, the first display module 1220 is further configured to: in response to the first trigger operation acting on the first recommended text item, replace the first recommended text item with other recommended text items than the first recommended text item for displaying in the first target area.

Optionally, the apparatus can further include: a first associated text determination module configured to, in response to an editing operation on the first text, determine at least two first associated text items based on the first text; the first display module 1220 can be further configured to replace the recommended text items with the at least two first associated text items for displaying in the first target area.

Optionally, the second display module 1230 is also configured to: in response to a third trigger operation acting on the target associated text item, display a third text included in the target associated text item in a text input area of the editing page, wherein the third trigger operation is used to determine the selected target associated text item from the at least two first associated text items.

Optionally, the apparatus further includes: a second associated text determination module configured to determine at least two second associated text items based on the third text; correspondingly, the first display module 1220 is further configured to replace the at least two first associated text items with the at least two second associated text items for displaying in the first target area.

Optionally, the recommended text items may be sorted and displayed in the first target area based on the relevance of each associated text item to the video to be edited and/or the popularity of each recommended text item.

And/or, the associated text items may be sorted and displayed in the first target area based on the relevance of each associated text item to the video to be edited and/or the popularity of each associated text item.

Optionally, the recommended text determination module 1210 may include: a frame extraction unit configured to performing frame extraction on the video to be edited; a first determination unit configured to determine theme information of the video to be edited based on the extracted video frames; and a second determination unit configured to determine the at least two recommended text items based on the theme information and/or popularity information of each candidate text item in a text library.

Optionally, the apparatus may further include: a third display module configured to display a copywriting library control at a target position of the editing page; a fourth display module configured to, in response to a trigger operation acting on the copy writing library control, display preset copywritings in a second target area of the editing page; correspondingly, the second display module 1230 can be further configured to: in response to a fourth trigger operation for a target preset copywriting, display the target preset copywriting in a text input area of the editing page, wherein the fourth triggering operation is used to determine the selected target preset copywriting from the preset copywritings.

Optionally, the apparatus may further includes: a fifth display module configured to display at least two copywriting category labels in a third target area of the editing page; correspondingly, the fourth display module can be further configured to: in response to a fifth triggering operation acting on the target copywriting category label, display preset copywritings under the target copywriting category label in the second target area, wherein the fifth triggering operation is used to determine the selected target copywriting category label from the at least two copywriting category labels.

Optionally, the first display module 1220 can be further configured to: if the operation of determining at least two recommended text items based on the video to be edited fails, display preset text items in the first target area.

The text input method apparatus by this embodiment determines at least two recommended text items based on the video to be edited, and displays the at least two recommended text items in the first target area of the video editing page, if the user triggers one of the recommended text items, then, the first text included in the triggered recommended text item is displayed in the text input area of the edit page, thereby realizing the input of the first text. That is, when the user is intended to add text to the video to be edited, recommended text items can be provided to the user, the user only needs to select the one with which the user is satisfied from the provided recommended text items, without the user needing to organize the language to form the text, which can reduce the user's thinking cost and improve the user's satisfaction with the added text, and then can encourage more users to add text information when publishing videos, and thereby greatly meet the needs of some users who have text expression needs but are limited by their own language expression level. Furthermore, adding more text information to the video will help to improve the efficiency of video consumption.

The text input apparatus provided by the embodiments of the present disclosure can perform the steps in the text input method provided by the method embodiments of the present disclosure, and the execution operations and beneficial effects will not be described in detail here.

FIG. 13 is a schematic structural diagram of an electronic device according to an embodiment of the present disclosure. Hereinafter reference is specifically made to FIG. 13, which is a schematic structural diagram of an electronic device 500 suitable for implementing an embodiment of the present disclosure. The electronic device 500 in the embodiment of the present disclosure may include, but not limited to, mobile terminals such as mobile phones, notebook computers, digital broadcast receivers, PDAs (personal digital assistants), PADs (tablet computers), PMP (portable multimedia players), vehicle-mounted terminals (e.g., vehicle navigation terminals), wearable electronic devices, etc., and fixed terminals such as digital TVs, desktop computers, smart home devices, etc. The electronic device shown in FIG. 13 is only an example and should not bring any limitations to the functions and scope of use of the embodiments of the present disclosure.

As shown in FIG. 13, the electronic device 500 may include a processing device (e.g., central processing unit, graphics processor, etc.) 501, which may perform various appropriate actions and processes according to programs that are stored in a read-only memory (ROM) 502 or loaded to a random-access memory (RAM) 503 from a storage device 508, to implement the methods of the embodiments described in the present disclosure. In RAM 503, various programs and data required for the operation of the electronic device 500 are also stored. The processing device 501, the ROM 502 and the RAM 503 are connected to each other via a bus 504. An input/output (I/O) interface 505 is also connected to bus 504.

Generally, the following devices may be connected to the I/O interface 505: an input devices 506 including, for example, a touch screen, touch pad, keyboard, mouse, camera, microphone, accelerometer, gyroscope, etc.; an output device 507 including, for example, a liquid crystal display (LCD), speakers, vibration, etc.; a storage device 508 including a magnetic tape, a hard disk, etc.; and a communication device 509. Communication device 509 may allow the electronic device 500 to communicate wirelessly or wiredly with other devices to exchange data. Although FIG. 13 illustrates electronic device 500 with various devices, it should be understood that it is not required to implement or provide all illustrated devices. More or fewer devices may alternatively be implemented or provided.

In particular, according to embodiments of the present disclosure, the processes described above with reference to the flowcharts may be implemented as computer software programs. For example, embodiments of the present disclosure include a computer program product, which includes a computer program carried on a non-transitory computer-readable medium, the computer program including program codes for executing the method shown in the flowchart, thereby achieving the above the method described. In such embodiments, the computer program may be downloaded and installed from the network via communication device 509, or installed from storage device 508, or installed from ROM 502. When the computer program is executed by the processing device 501, the above-mentioned functions defined in the method of the embodiment of the present disclosure are performed.

It should be noted that the computer-readable medium mentioned above in the present disclosure may be a computer-readable signal medium or a computer-readable storage medium, or any combination of the above two. The computer-readable storage medium may be, for example, but not limited to, an electrical, magnetic, optical, electromagnetic, infrared, or semiconductor system, apparatus or device, or any combination thereof. More specific examples of computer readable storage media may include, but not limited to: an electrical connection having one or more wires, a portable computer disk, a hard drive, random access memory (RAM), read only memory (ROM), removable Programmed read-only memory (EPROM or flash memory), fiber optics, portable compact disk read-only memory (CD-ROM), optical storage device, magnetic storage device, or any suitable combination of the above. In this disclosure, a computer-readable storage medium may be any tangible medium that contains or stores a program for use by or in connection with an instruction execution system, apparatus, or device. In the present disclosure, a computer-readable signal medium may include data signal propagated in baseband or as part of a carrier wave, carrying computer-readable program code therein. Such propagated data signals may take many forms, including but not limited to electromagnetic signals, optical signals, or any suitable combination of the above. A computer-readable signal medium may also be any computer-readable medium other than a computer-readable storage medium, and can send, propagate, or transmit a program for use by or in connection with an instruction execution system, apparatus, or device. Program codes embodied on a computer-readable medium may be transmitted using any suitable medium, including but not limited to: wire, optical cable, RF (radio frequency), etc., or any suitable combination of the above.

In some embodiments, the client and server can communicate using any currently known or future developed network protocol such as HTTP (HyperText Transfer Protocol), and can interconnect with digital data communication (e.g., communications network) in any form or medium. Examples of communication networks include local area networks ("LAN"), wide area networks ("WAN"), the Internet (e.g., the Internet), and end-to-end networks (e.g., ad hoc end-to-end networks), as well as any network currently known or developed in the future.

The above-mentioned computer-readable medium may be included in the above-mentioned electronic device; it may also exist separately without being assembled into the electronic device.

The above-mentioned computer-readable medium carries one or more programs, the above-mentioned one or more programs, when executed by the electronic device, cause the electronic device to:
determine at least two recommended text items based on a video to be edited; display the at least two recommended text items in a first target area of an editing page for the video to be edited; and in response to a first trigger operation acting on a first recommended text item, display a first text included in the first recommended text item in a text input area of the editing page, wherein the first trigger operation is used to determine the selected first recommended text item from the at least two recommended text items.

Optionally, when the above one or more programs are executed by the electronic device, the electronic device may also perform other steps described in the above embodiments.

Computer program codes for performing the operations of the present disclosure may be written in one or more programming languages, including but not limited to object-oriented programming languages, such as Java, Smalltalk, C++, and can also include conventional procedural programming languages, such as "C" or similar programming languages. The program codes may be executed entirely on the user's computer, partly on the user's computer, as a stand-alone software package, partly on the user's computer and partly on a remote computer, or entirely on the remote computer or server. In situations involving remote computers, the remote computer can be connected to the user's computer through any kind of network, including a local area network (LAN) or a wide area network (WAN), or it can be connected to an external computer (such as an Internet service provider through Internet connection).

The flowcharts and block diagrams in the drawings illustrate the architectures, functionalities, and operations of possible implementations of systems, methods, and computer program products according to various embodiments of the present disclosure. In this regard, each block in the flowchart or block diagram may represent a module, a program segment, or a part of codes that contain one or more logic functions that implement the specified executable instructions. It should also be noted that, in some alternative implementations, the functions noted in the block may occur out of the order noted in the figures. For example, two blocks shown successively may actually execute substantially in parallel, or they may sometimes execute in the reverse order, depending on the functionality involved. It will also be noted that each block of the block diagram and/or flowchart illustration, and combinations of blocks in the block diagram and/or flowchart illustration, can be implemented by special purpose hardware-based systems that perform the specified functions or operations, or can be implemented using a combination of special hardware and computer instructions.

The units involved in the embodiments of the present disclosure can be implemented in software or hardware. Among them, the name of a unit does not constitute a limitation on the unit itself under certain circumstances.

The functions described above herein may be performed, at least in part, by one or more hardware logic components. For example, and without limitation, exemplary types of hardware logic components that may be used include Field Programmable Gate Arrays (FPGAs), Application Specific Integrated Circuits (ASICs), Application Specific Standard Products (ASSPs), Systems on Chips (SOCs), Complex Programmable Logical device (CPLD) and so on.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable medium may include, but not limited to, an electrical, magnetic, optical, electromagnetic, infrared, or semiconductor system, apparatus or device, or any combination thereof. More specific examples of computer readable storage media may include, but not limited to: an electrical connection having one or more wires, a portable computer disk, a hard drive, random access memory (RAM), read only memory (ROM), removable Programmed read-only memory (EPROM or flash memory), fiber optics, portable compact disk read-only memory (CD-ROM), optical storage device, magnetic storage device, or any suitable combination of the above

According to one or more embodiments of the present disclosure, the present disclosure provides a text input method, including: determining at least two recommended text items based on a video to be edited; displaying the at least two recommended text items in a first target area of an editing page for the video to be edited; in response to a first trigger operation acting on a first recommended text item, displaying a first text included in the first recommended text item in a text input area of the editing page, wherein the first trigger operation is used to determine the selected first recommended text item from the at least two recommended text items.

According to one or more embodiments of the present disclosure, in the text input method provided by the present disclosure, optionally, it further includes: in response to a second trigger operation acting on a second recommended text item, replacing the first text with a second text included in the second recommended text item, or displaying the second text at an associated position of the first text, wherein the second trigger operation is used to determine the selected second recommended text item from the at least two recommended text items.

According to one or more embodiments of the present disclosure, in the text input method provided by the present disclosure, optionally, it further includes: in response to the first trigger operation acting on the first recommended text item, replacing the first recommended text item with other recommended text items than the first recommended text item for displaying in the first target area.

According to one or more embodiments of the present disclosure, in the text input method provided by the present disclosure, optionally, it further includes: in response to an editing operation on the first text, determining at least two first associated text items based on the first text; and replacing the recommended text items with the at least two first associated text items for displaying in the first target area.

According to one or more embodiments of the present disclosure, in the text input method provided by the present disclosure, optionally, it further includes: in response to a third trigger operation acting on the target associated text item, displaying a third text included in the target associated text item in a text input area of the editing page, wherein the third trigger operation is used to determine the selected target associated text item from the at least two first associated text items; determining at least two second associated text items based on the third text; and replacing the at least two first associated text items with the at least two second associated text items for displaying in the first target area.

According to one or more embodiments of the present disclosure, in the text input method provided by the present disclosure, optionally, the recommended text items may be sorted and displayed in the first target area based on the relevance of each associated text item to the video to be edited and/or the popularity of each recommended text item. And/or, the associated text items may be sorted and displayed in the first target area based on the relevance of each associated text item to the video to be edited and/or the popularity of each associated text item.

According to one or more embodiments of the present disclosure, in the text input method provided by the present disclosure, optionally, the determining the at least two recommended text items based on the video to be edited includes: performing frame extraction on the video to be edited; determining theme information of the video to be edited based on the extracted video frames; and determining the at least two recommended text items based on the theme information and/or popularity information of each candidate text item in a text library.

According to one or more embodiments of the present disclosure, in the text input method provided by the present disclosure, optionally, it further includes: displaying a copy writing library control at a target position of the editing page; in response to a trigger operation acting on the copywriting library control, displaying preset copy writings in a second target area of the editing page; and in response to a fourth trigger operation for a target preset copywriting, displaying the target preset copywriting in a text input area of the editing page, wherein the fourth triggering operation is used to determine the selected target preset copywriting from the preset copywritings.

According to one or more embodiments of the present disclosure, in the text input method provided by the present disclosure, optionally, it further includes: displaying at least two copywriting category labels in a third target area of the editing page; in response to a fifth triggering operation acting on the target copywriting category label, displaying preset copywritings under the target copywriting category label in the second target area, wherein the fifth triggering operation is used to determine the selected target copywriting category label from the at least two copywriting category labels.

According to one or more embodiments of the present disclosure, in the text input method provided by the present disclosure, optionally, it further includes: if the operation of determining at least two recommended text items based on the video to be edited fails, displaying preset text items in the first target area.

According to one or more embodiments of the present disclosure, the present disclosure provides a text input apparatus, including:
a recommended text determination module configured to determine at least two recommended text items based on a video to be edited;
a first display module configured to display the at least two recommended text items in a first target area of an editing page for the video to be edited; and
a second display module configured to, in response to a first trigger operation acting on a first recommended text item, display a first text included in the first recommended text item in a text input area of the editing page, wherein the first trigger operation is used to determine the selected first recommended text item from the at least two recommended text items.

According to one or more embodiments of the present disclosure, in the text input apparatus provided by the present disclosure, optionally, the second display module is further configured to in response to a second trigger operation acting on a second recommended text item, replace the first text with a second text included in the second recommended text item, or display the second text at an associated position of the first text, wherein the second trigger operation is used to determine the selected second recommended text item from the at least two recommended text items.

According to one or more embodiments of the present disclosure, in the text input apparatus provided by the present disclosure, optionally, the first display module is further configured to: in response to the first trigger operation acting on the first recommended text item, replace the first recommended text item with other recommended text items than the first recommended text item for displaying in the first target area.

According to one or more embodiments of the present disclosure, in the text input apparatus provided by the present disclosure, optionally, the apparatus can further include: a first associated text determination module configured to, in response to an editing operation on the first text, determine at least two first associated text items based on the first text; the first display module can be further configured to replace the recommended text items with the at least two first associated text items for displaying in the first target area.

According to one or more embodiments of the present disclosure, in the text input apparatus provided by the present disclosure, optionally, the second display module is also configured to: in response to a third trigger operation acting on the target associated text item, display a third text included in the target associated text item in a text input area of the editing page, wherein the third trigger operation is used to determine the selected target associated text item from the at least two first associated text items.

According to one or more embodiments of the present disclosure, in the text input apparatus provided by the present disclosure, optionally, the apparatus further includes: a second associated text determination module configured to determine at least two second associated text items based on the third text; correspondingly, the first display module is further configured to replace the at least two first associated text items with the at least two second associated text items for displaying in the first target area.

According to one or more embodiments of the present disclosure, in the text input apparatus provided by the present disclosure, optionally, the recommended text items may be sorted and displayed in the first target area based on the relevance of each associated text item to the video to be edited and/or the popularity of each recommended text item. And/or, the associated text items may be sorted and displayed in the first target area based on the relevance of each associated text item to the video to be edited and/or the popularity of each associated text item.

According to one or more embodiments of the present disclosure, in the text input apparatus provided by the present disclosure, optionally, the recommended text determination module may include: a frame extraction unit configured to performing frame extraction on the video to be edited; a first determination unit configured to determine theme information of the video to be edited based on the extracted video frames; and a second determination unit configured to determine the at least two recommended text items based on the theme information and/or popularity information of each candidate text item in a text library.

According to one or more embodiments of the present disclosure, in the text input apparatus provided by the present disclosure, optionally, the apparatus may further include: a third display module configured to display a copywriting library control at a target position of the editing page; a fourth display module configured to, in response to a trigger operation acting on the copywriting library control, display preset copy writings in a second target area of the editing page; correspondingly, the second display module can be further configured to: in response to a fourth trigger operation for a target preset copywriting, display the target preset copywriting in a text input area of the editing page, wherein the fourth triggering operation is used to determine the selected target preset copywriting from the preset copywritings.

According to one or more embodiments of the present disclosure, in the text input apparatus provided by the present disclosure, optionally, the apparatus may further includes: a fifth display module configured to display at least two copywriting category labels in a third target area of the editing page; correspondingly, the fourth display module can be further configured to: in response to a fifth triggering operation acting on the target copywriting category label, display preset copy writings under the target copywriting category label in the second target area, wherein the fifth triggering operation is used to determine the selected target copywriting category label from the at least two copywriting category labels.

According to one or more embodiments of the present disclosure, in the text input apparatus provided by the present disclosure, optionally, the first display module can be further configured to: if the operation of determining at least two recommended text items based on the video to be edited fails, display preset text items in the first target area.

According to one or more embodiments of the present disclosure, the present disclosure provides an electronic device, including:
one or more processors;
a memory configured to store one or more programs;

Where the one or more programs, when executed by the one or more processors, cause the one or more processors to implement any of the text input methods provided by this disclosure.

According to one or more embodiments of the present disclosure, the present disclosure provides a computer-readable storage medium having a computer program stored thereon, where the program, when executed by a processor, cause implementation of any of the text input methods provided by this disclosure.

Embodiments of the present disclosure also provide a computer program product including computer programs or instructions which, when executed by a processor, cause implementation of any of the text input methods provided by this disclosure.

The above description is only a description of the preferred embodiments of the present disclosure and the technical principles applied. Those skilled in the art should understand that the disclosure scope involved in the present disclosure is not limited to technical solutions composed of specific combinations of the above technical features, but should also cover other technical solutions formed by any combination of the above technical features and equivalent features, without departing from the above disclosed concept, for example, a technical solution that is formed by exchanging the above features with technical features with similar functions disclosed in this disclosure (but not limited to).

Furthermore, although operations are depicted in a specific order, this should not be understood as requiring that these operations be performed in the specific order shown or performed in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination. Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A text input method, wherein the method comprises:
determining at least two recommended text items based on a video to be edited;
displaying the at least two recommended text items in a first target area of an editing page for the video to be edited; and
in response to a first trigger operation acting on a first recommended text item, displaying a first text comprised in the first recommended text item in a text input area of the editing page, wherein the first trigger operation is used to determine the selected first recommended text item from the at least two recommended text items.

2. The method of claim 1, wherein, the method further comprises: in response to a second trigger operation acting on a second recommended text item, replacing the first text with a second text comprised in the second recommended text item, or displaying the second text at an associated position of the first text,
wherein the second trigger operation is used to determine the selected second recommended text item from the at least two recommended text items.

3. The method of claim 1, wherein, the method further comprises:
in response to the first trigger operation acting on the first recommended text item, replacing the first recommended text item with other recommended text items than the first recommended text item for displaying in the first target area.

4. The method of claim 1, wherein, the method further comprises:
In response to an editing operation on the first text, determining at least two first associated text items based on the first text; and
replacing the recommended text items with the at least two first associated text items for displaying in the first target area.

5. The method of claim 4, wherein, the method further comprises:
in response to a third trigger operation acting on the target associated text item, displaying a third text comprised in the target associated text item in a text input area of the editing page, wherein the third trigger operation is used to determine the selected target associated text item from the at least two first associated text items;
determining at least two second associated text items based on the third text; and replacing the at least two first associated text items with the at least two second associated text items for displaying in the first target area.

6. The method of claim 4, wherein, the recommended text items may be sorted and displayed in the first target area based on the relevance of each associated text item to the video to be edited and/or the popularity of each recommended text item, and/or,
the associated text items may be sorted and displayed in the first target area based on the relevance of each associated text item to the video to be edited and/or the popularity of each associated text item.

7. The method of any one of claims 1-6, wherein, the determining the at least two recommended text items based on the video to be edited comprises:
performing frame extraction on the video to be edited;
determining theme information of the video to be edited based on the extracted video frames; and
determining the at least two recommended text items based on the theme information and/or popularity information of each candidate text item in a text library.

8. The method of any one of claims 1-6, wherein, the method further comprises:
displaying a copywriting library control at a target position of the editing page;
in response to a trigger operation acting on the copy writing library control, displaying preset copy writings in a second target area of the editing page; and
in response to a fourth trigger operation for a target preset copywriting, displaying the target preset copywriting in a text input area of the editing page, wherein the fourth triggering operation is used to determine the selected target preset copywriting from the preset copywritings.

9. The method of claim 8, wherein, the method further comprises:
displaying at least two copywriting category labels in a third target area of the editing page;
in response to a fifth triggering operation acting on the target copywriting category label, displaying preset copy writings under the target copywriting category label in the second target area, wherein the fifth triggering operation is used to determine the selected target copywriting category label from the at least two copywriting category labels.

10. The method of any one of claims 1-6, wherein, the method further comprises:
if the operation of determining at least two recommended text items based on the video to be edited fails, displaying preset text items in the first target area.

11. A text input apparatus, including:
a recommended text determination module configured to determine at least two recommended text items based on a video to be edited;
a first display module configured to display the at least two recommended text items in a first target area of an editing page for the video to be edited; and
a second display module configured to, in response to a first trigger operation acting on a first recommended text item, display a first text comprised in the first recommended text item in a text input area of the editing page, wherein the first trigger operation is used to determine the selected first recommended text item from the at least two recommended text items.

12. An electronic device, wherein the electronic device comprises:
one or more processors;
a storage device for storing one or more programs;
the one or more programs, when executed by the one or more processors, cause the one or more processors to implement the method of any one of claims 1-10.

13. A computer-readable storage medium with a computer program stored thereon, wherein the program, when executed by a processor, causes implementation of the method of any one of claims 1-10.
